# EUROPEAN PATENT APPLICATION

(11) **EP 4 800 754 A1**
(43) Date of publication of application: **02.09.2026**
(21) Application number: 24897447.9
(22) Date of filing: 22.11.2024
(51) Int. Cl.: H01M 4/134, H01M 4/38, H01M 4/1395, H01M 10/052, H01M 10/0566

(54) **NONAQUEOUS ELECTROLYTE POWER STORAGE ELEMENT, POWER STORAGE DEVICE, AND METHOD FOR MANUFACTURING NEGATIVE ELECTRODE**

(30) Priority: 27.11.2023 JP 2023200158
(71) Applicant: GS Yuasa International Ltd., Kisshoin, Minami-ku, Kyoto-shi, Kyoto 601-8520 (JP)
(72) Inventor: UEDA, Jinya, Kyoto-shi, Kyoto 601-8520 (JP)
(74) Representative: Isarpatent
(86) International application number: PCT/JP2024/041362
(87) International publication number: WO 2025/115761

(57) **Abstract**

A non-aqueous electrolyte solution energy storage device according to one aspect of the present invention includes a positive electrode, a negative electrode, and a non-aqueous electrolyte solution, in which: the negative electrode includes a negative electrode active material layer containing metallic lithium, and a protective layer stacked on the negative electrode active material layer; and the protective layer contains a polymer having a structural unit derived from an unsaturated cyclic carbonate and a porous sheet supporting at least a part of the polymer.

## Description

### TECHNICAL FIELD

The present invention relates to a non-aqueous electrolyte solution energy storage device, an energy storage apparatus, and a method for manufacturing a negative electrode.

### BACKGROUND ART

Non-aqueous electrolyte solution secondary batteries, whose typical examples are lithium-ion secondary batteries, are often used in electronic devices such as personal computers and communication terminals, automobiles, and the like, owing to their high energy density. Generally, the non-aqueous electrolyte solution secondary battery includes: a pair of electrodes electrically isolated from each other by a separator; and a non-aqueous electrolyte solution interposed between the electrodes, and is configured to be charged and discharged by transfer of charge-transporting ions between the two electrodes. Further, as non-aqueous electrolyte solution energy storage devices other than the non-aqueous electrolyte solution secondary batteries, capacitors such as lithium-ion capacitors, electric double layer capacitors, or the like, have been widely used.

In recent years, with the aim of increasing a capacity of non-aqueous electrolyte solution energy storage devices, increasing a capacity of a negative electrode has been required. When metallic lithium is compared with graphite which is currently widely used as a negative electrode active material of a non-aqueous electrolyte solution energy storage device, metallic lithium has a significantly larger discharge capacity per mass of the active material than the graphite. For this reason, a non-aqueous electrolyte solution energy storage device using metallic lithium as the negative electrode active material has been proposed (see prior art document 1).

### CITATION LIST

### Patent Literature

Patent Literature 1: Japanese Unexamined Patent Application Publication (Translation of PCT Application) No. 2020-517054

### DISCLOSURE OF INVENTION

### PROBLEMS TO BE SOLVED BY THE INVENTION

When metallic lithium is used as the negative electrode active material, it is concerned that dendritic metallic lithium (a dendrite) may be deposited on a surface of the negative electrode.

An object of the present invention is to provide a non-aqueous electrolyte solution energy storage device and an energy storage apparatus which include a negative electrode containing metallic lithium, and in which deposition of dendrites on the negative electrode can be suppressed, and a method for manufacturing a negative electrode which contains metallic lithium and in which deposition of dendrites can be suppressed.

### MEANS FOR SOLVING THE PROBLEMS

A non-aqueous electrolyte solution energy storage device according to one aspect of the present invention includes a positive electrode, a negative electrode, and a non-aqueous electrolyte solution, in which: the negative electrode includes a negative electrode active material layer containing metallic lithium, and a protective layer stacked on the negative electrode active material layer; and the protective layer contains a polymer having a structural unit derived from an unsaturated cyclic carbonate and a porous sheet supporting at least a part of the polymer.

An energy storage apparatus according to another aspect of the present invention includes two or more energy storage devices, in which the energy storage apparatus includes one or more non-aqueous electrolyte solution energy storage devices according to the one aspect of the present invention.

A method for manufacturing a negative electrode according to yet another aspect of the present invention includes: preparing a negative electrode material including a negative electrode active material layer containing metallic lithium; making a polymer solution containing a polymer having a structural unit derived from an unsaturated cyclic carbonate; preparing a porous sheet; and stacking a protective layer on the negative electrode active material layer by use of the polymer solution and the porous sheet, in which the protective layer contains the polymer and the porous sheet supporting at least a part of the polymer.

### EFFECT OF THE INVENTION

According to an aspect of the present invention, it is possible to provide a non-aqueous electrolyte solution energy storage device and an energy storage apparatus which include a negative electrode containing metallic lithium, and in which deposition of dendrites on the negative electrode can be suppressed, and a method for manufacturing a negative electrode which contains metallic lithium and in which deposition of dendrites can be suppressed.

### BRIEF DESCRIPTION OF DRAWINGS

FIG. 1 is a schematic cross-sectional view of an electrode body of a non-aqueous electrolyte solution energy storage device according to an embodiment of the present invention.
FIG. 2 is a schematic cross-sectional view of an electrode body of a non-aqueous electrolyte solution energy storage device different from that of FIG. 1.
FIG. 3 is a schematic cross-sectional view of an electrode body of a non-aqueous electrolyte solution energy storage device different from those of FIGS. 1 and 2.
FIG. 4 is a see-through perspective view illustrating an embodiment of a non-aqueous electrolyte solution energy storage device.
FIG. 5 is a schematic view illustrating an embodiment of an energy storage apparatus which is configured by assembling a plurality of non-aqueous electrolyte solution energy storage devices.
FIG. 6 is a SEM cross-sectional image of an electrode body in a non-aqueous electrolyte solution energy storage device of Reference example 1.
FIG. 7 is a SEM cross-sectional image of an electrode body in a non-aqueous electrolyte solution energy storage device of Example 2.

### DESCRIPTION OF EMBODIMENTS

First, an outline of a non-aqueous electrolyte solution energy storage device and a method of manufacturing a negative electrode disclosed in the present specification will be described.

[1] A non-aqueous electrolyte solution energy storage device according to one aspect of the present invention includes a positive electrode, a negative electrode, and a non-aqueous electrolyte solution, in which: the negative electrode includes a negative electrode active material layer containing metallic lithium, and a protective layer stacked on the negative electrode active material layer; and the protective layer contains a polymer having a structural unit derived from an unsaturated cyclic carbonate and a porous sheet supporting at least a part of the polymer.

The non-aqueous electrolyte solution energy storage device according to [1] above can suppress deposition of dendrites on the negative electrode. Although the reason for this is not clarified, the following reasons are presumed. A dendrite gradually grows as the metallic lithium is deposited non-uniformly on the negative electrode due to charge and discharge cycles. Thus, it is considered that the deposition of the dendrite can be suppressed by maintaining the form of deposition of the metallic lithium to be uniform along a surface of the negative electrode. The non-aqueous electrolyte solution energy storage device according to [1] above includes a protective layer stacked on the negative electrode active material layer containing metallic lithium. Therefore, when metallic lithium is deposited on the negative electrode due to a charge, the metallic lithium is deposited in such a state of being sandwiched between the negative electrode active material layer and the protective layer. In addition, since the protective layer contains a polymer having the structural unit derived from an unsaturated cyclic carbonate, a surface of the protective layer is easily maintained to be smooth and dense. Furthermore, since the protective layer contains a porous sheet which supports at least a part of the polymer having the structural unit derived from the unsaturated cyclic carbonate, mechanical strength of the protective layer is enhanced, and the form of the protective layer is easily maintained stably. Consequently, in the non-aqueous electrolyte solution energy storage device according to [1] above, the metallic lithium tends to be deposited uniformly along the surface of the negative electrode active material layer, and the deposition of the dendrites on the negative electrode can be suppressed.

[2] The non-aqueous electrolyte solution energy storage device according to [1] above may further include a porous separator which is interposed between the positive electrode and the negative electrode and retains the non-aqueous electrolyte solution.

The non-aqueous electrolyte solution energy storage device according to [2] above further includes the separator, which is porous, for retaining the electrolyte solution. Thus, a sufficient amount of charge-transporting ions are easily supplied from the separator to the negative electrode. Therefore, it is possible to suppress an increase in the resistance of the non-aqueous electrolyte solution energy storage device.

[3] In the non-aqueous electrolyte solution energy storage device according to [1] or [2] above, the protective layer may include a polymer layer which contains the polymer and is stacked on the negative electrode active material layer; at least a part of the polymer in the polymer layer may be supported by the porous sheet; and an average thickness of the polymer layer may be 1 µm or more.

In the non-aqueous electrolyte solution energy storage device according to [3] above, the protective layer includes the polymer layer stacked on the negative electrode active material layer. Thus, the surface of the protective layer opposed to the negative electrode active material layer is more easily maintained to be smooth and dense. In addition, since the average thickness of the polymer layer is greater than or equal to the above-described lower limit, the polymer layer is easily maintained stably. Therefore, the deposition of the dendrites on the negative electrode can be more reliably suppressed.

[4] In the non-aqueous electrolyte solution energy storage device according to any one of [1] to [3] above, the positive electrode may contain a sulfur-based active material, and the non-aqueous electrolyte solution may contain a carbonate.

In the non-aqueous electrolyte solution energy storage device according to [4] above, since the positive electrode contains a sulfur-based active material, a discharge capacity of the non-aqueous electrolyte solution energy storage device can be increased by combining this positive electrode with the negative electrode containing metallic lithium. Further, when the positive electrode contains a sulfur-based active material, a non-aqueous electrolyte solution containing a carbonate is suitably used.

[5] In the non-aqueous electrolyte solution energy storage device according to any one of [1] to [4] above, the protective layer may further contain a lithium salt, and a content of the lithium salt based on the polymer may be 1 mol/kg or more.

In the non-aqueous electrolyte solution energy storage device according to [5] above, the protective layer further contains a lithium salt, and the content of the lithium salt based on the polymer is greater than or equal to the above-described lower limit. By this feature, in stacking the protective layer, warpage of the negative electrode can be suppressed. In addition, ion permeability in the protective layer can be enhanced, and an increase in the resistance of the negative electrode due to the protective layer can be suppressed. Furthermore, flexibility of the protective layer can be increased, and occurrence of cracks in the protective layer can be suppressed.

The contents of the polymer and the lithium salt in the protective layer are measured on the basis of a sample prepared by the following procedure. The non-aqueous electrolyte solution energy storage device is subjected to a constant current discharge at a current of 0.1 C down to a discharge cutoff voltage at the time of normal use to bring the non-aqueous electrolyte solution energy storage device into a discharged state. The non-aqueous electrolyte solution energy storage device in the discharged state is disassembled, and the negative electrode is taken out, sufficiently washed with dimethyl carbonate, and then dried under reduced pressure at room temperature. After that, the protective layer being stacked on the negative electrode active material layer is separated from the negative electrode and collected as a sample. Operations from the disassembly of the non-aqueous electrolyte solution energy storage device to the collection of the sample are performed in a dry air atmosphere having a dew point of -40 °C or less. The above "at the time of normal use" refers to the case of using the non-aqueous electrolyte solution energy storage device by adopting charge and discharge conditions recommended or specified for this non-aqueous electrolyte solution energy storage device. When a device for using the non-aqueous electrolyte solution energy storage device is prepared, "at the time of normal use" refers to the case of using the non-aqueous electrolyte solution energy storage device by applying that device.

[6] In the non-aqueous electrolyte solution energy storage device according to any one of [1] to [5] above, air permeability of the porous sheet may be 100 sec/100 cm³ or less.

The "air permeability" is also referred to as a Gurley value, and indicates the time required for the air of 100 cm³ to pass through a sample having a certain area under a constant pressure difference, and is a value measured in conformity with JIS P 8117 (2009).

In the non-aqueous electrolyte solution energy storage device according to [6] above, the air permeability of the porous sheet is not greater than the above-described upper limit. Thus, the non-aqueous electrolyte solution is allowed to easily move through the protective layer, whereby the ion permeability in the protective layer is enhanced. Consequently, it is possible to suppress an increase in the resistance of the negative electrode due to the protective layer.

[7] In the non-aqueous electrolyte solution energy storage device according to any one of [1] to [6] above, the porous sheet may not include an inorganic compound layer on an outermost surface thereof on the negative electrode active material layer side.

When the porous sheet includes an inorganic compound layer on the outermost surface of the porous sheet that is on the negative electrode active material layer side, metallic lithium, which is to be deposited between the inorganic compound and the negative electrode active material layer, tends to be deposited non-uniformly. In contrast, in the non-aqueous electrolyte solution energy storage device according to [7] above, the porous sheet does not include an inorganic compound layer on the outermost surface thereof on the negative electrode active material layer side. Thus, metallic lithium tends to be deposited uniformly along the surface of the negative electrode active material layer, and the deposition of dendrites on the negative electrode can be further suppressed.

[8] An energy storage apparatus according to another aspect of the present invention includes two or more energy storage devices, in which the energy storage apparatus includes one or more non-aqueous electrolyte solution energy storage devices according to any one of [1] to [7] above.

Since the energy storage apparatus described in [8] above includes one or more non-aqueous electrolyte solution energy storage devices according to any one of [1] to [7] above, deposition of the dendrites on the negative electrode can be suppressed.

[9] A method for manufacturing a negative electrode according to yet another aspect of the present invention includes: preparing a negative electrode material including a negative electrode active material layer containing metallic lithium; making a polymer solution containing a polymer having a structural unit derived from an unsaturated cyclic carbonate; preparing a porous sheet; and stacking a protective layer on the negative electrode active material layer by use of the polymer solution and the porous sheet, in which the protective layer contains the polymer and the porous sheet supporting at least a part of the polymer.

With the method for manufacturing a negative electrode according to [9] above, it is possible to manufacture a negative electrode including a protective layer stacked on the negative electrode active material layer containing metallic lithium. In such a negative electrode, when metallic lithium is deposited on the negative electrode due to a charge, the metallic lithium is deposited in such a state of being sandwiched between the negative electrode active material layer and the protective layer. In addition, since the protective layer contains a polymer having the structural unit derived from an unsaturated cyclic carbonate, a surface of the protective layer is easily maintained to be smooth and dense. Furthermore, since the protective layer contains a porous sheet which supports at least a part of the polymer having the structural unit derived from the unsaturated cyclic carbonate, mechanical strength of the protective layer is enhanced, and the form of the protective layer is easily maintained stably. Consequently, with the method for manufacturing a negative electrode according to [9] above, it is possible to manufacture a negative electrode in which metallic lithium tends to be deposited uniformly along the surface of the negative electrode active material layer, and by which the deposition of dendrites on the negative electrode can be suppressed.

A non-aqueous electrolyte solution energy storage device, an energy storage apparatus, and a method for manufacturing a non-aqueous electrolyte solution energy storage device according to an embodiment of the present invention, and other embodiments of the present invention will be hereinafter described in detail. A method for manufacturing a negative electrode according to an embodiment of the present invention will be explained in the description of the method for manufacturing a non-aqueous electrolyte solution energy storage device. The names of constituent members (constituent elements) used in the embodiments may be in some cases different from the names of constituent members (constituent elements) used in the background art.

### <Non-aqueous Electrolyte Solution Energy Storage Device>

A non-aqueous electrolyte solution energy storage device according to an embodiment of the present invention includes: an electrode body including a positive electrode and a negative electrode; a non-aqueous electrolyte solution; and a container for accommodating therein the electrode body and the non-aqueous electrolyte solution. The negative electrode includes a negative electrode active material layer containing metallic lithium, and a protective layer stacked on the negative electrode active material layer. Further, the protective layer contains a polymer having a structural unit derived from an unsaturated cyclic carbonate and a porous sheet supporting at least a part of the polymer.

The electrode body is of a stacked type in which a plurality of positive electrodes and a plurality of negative electrodes are stacked, or of a wound type in which a positive electrode and a negative electrode are wound in a state in which they are stacked with a separator interposed therebetween. The electrode body may further include a separator interposed between the positive electrode and the negative electrode. In this case, the electrode body is formed in such a state that the positive electrode and the negative electrode are stacked with the separator interposed therebetween.

The non-aqueous electrolyte solution is present in a state of being contained in the positive electrode and the negative electrode, and further in the separator in some cases. A non-aqueous electrolyte solution secondary battery will be described as an example of the non-aqueous electrolyte solution energy storage device.

The non-aqueous electrolyte solution energy storage device includes a protective layer stacked on the negative electrode active material layer containing metallic lithium. Therefore, when metallic lithium is deposited on the negative electrode due to a charge, the metallic lithium is deposited in such a state of being sandwiched between the negative electrode active material layer and the protective layer. In addition, since the protective layer contains a polymer having a structural unit derived from an unsaturated cyclic carbonate, the surface of the protective layer is easily maintained to be smooth and dense. Furthermore, since the protective layer contains a porous sheet which supports at least a part of the polymer having the structural unit derived from the unsaturated cyclic carbonate, mechanical strength of the protective layer is enhanced, and the form of the protective layer is easily maintained stably. Consequently, in the non-aqueous electrolyte solution energy storage device, metallic lithium tends to be deposited uniformly along the surface of the negative electrode active material layer, and the deposition of dendrites on the negative electrode can be suppressed.

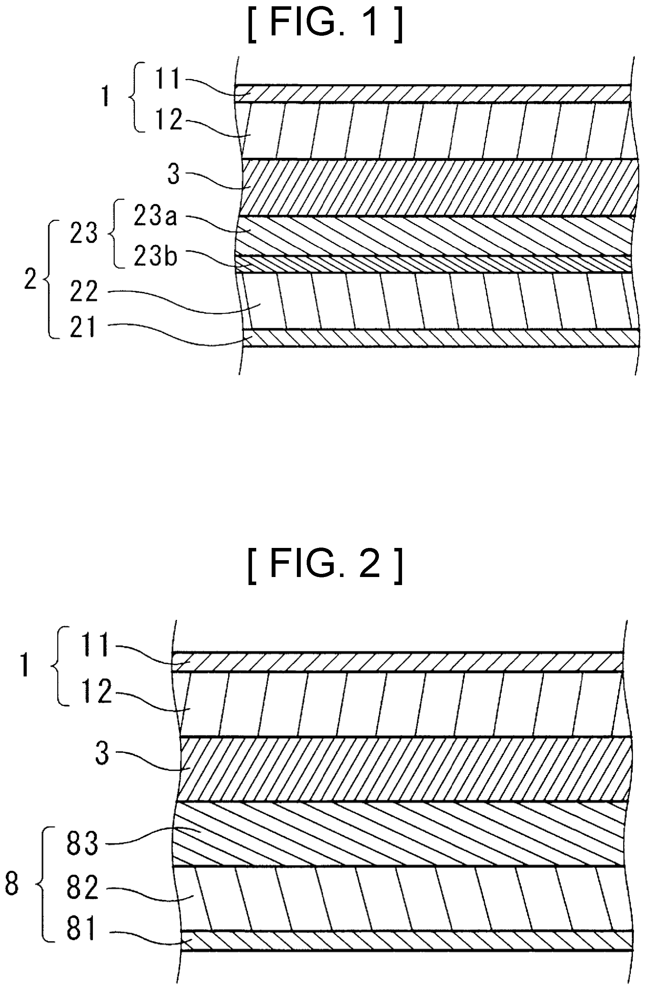

FIG. 1 is a schematic cross-sectional view of an electrode body of a non-aqueous electrolyte solution energy storage device according to an embodiment of the present invention. The electrode body is formed in such a state that a positive electrode 1 and a negative electrode 2 are stacked with a separator 3 interposed therebetween. The positive electrode 1 includes a positive electrode substrate 11, and a positive electrode active material layer 12 stacked on the positive electrode substrate 11. The negative electrode 2 includes a negative electrode substrate 21, a negative electrode active material layer 22 which is stacked on the negative electrode substrate 21 and contains metallic lithium, and a protective layer 23 stacked on the negative electrode active material layer 22. In the electrode body, the positive electrode substrate 11, the positive electrode active material layer 12, the separator 3, the protective layer 23, the negative electrode active material layer 22, and the negative electrode substrate 21 are stacked in this order. While an intermediate layer may be provided between the positive electrode substrate 11 and the positive electrode active material layer 12 and between the negative electrode substrate 21 and the negative electrode active material layer 22, the intermediate layer is omitted from FIG. 1.

The protective layer 23 includes an unsupported layer 23b, which is a layer of a polymer having a structural unit derived from an unsaturated cyclic carbonate and not being supported by a porous sheet, and a supported layer 23a containing the polymer being supported by the porous sheet. The supported layer 23a is formed in such a state that pores of the porous sheet are filled with the polymer. In the present embodiment, the supported layer 23a is disposed to be opposed to the separator 3, and the unsupported layer 23b is disposed to be opposed to the negative electrode substrate 21. In other words, the supported layer 23a and the unsupported layer 23b as a whole form a polymer layer which contains the polymer and is stacked on the negative electrode active material layer 22.

In the present embodiment, metallic lithium contained in the negative electrode active material layer 22 can be deposited between the negative electrode active material layer 22 and the protective layer 23, more specifically, between the negative electrode active material layer 22 and the unsupported layer 23b (between the negative electrode active material layer 22 and the polymer layer) due to a charge. As described above, the surface of the protective layer 23 is easily maintained to be smooth and dense, and the form of the protective layer 23 is also easily maintained stably. Therefore, the metallic lithium tends to be deposited uniformly along the surface of the negative electrode active material layer 22. That is, a smooth layer of metallic lithium tends to be formed between the negative electrode active material layer 22 and the protective layer 23 (between the negative electrode active material layer 22 and the unsupported layer 23b).

An average thickness of the porous sheet (the supported layer 23a) may be 1 µm or more and 20 µm or less, or may be 2 µm or more and 18 µm or less, or 4 µm or more and 16 µm or less. As the average thickness of the porous sheet (the supported layer 23a) is within the above-described range, the form of the protective layer 23 is more easily maintained stably.

An average thickness of the unsupported layer 23b may be 0.5 µm or more and 5 µm or less, or may be 0.8 µm or more and 4 µm or less, or 1 µm or more and 3µm or less. As the average thickness of the unsupported layer 23b is within the above-described range, a surface of the porous sheet is sufficiently covered with the polymer. Therefore, the surface of the protective layer 23 is more easily maintained to be smooth and dense.

An average thickness of the polymer layer (i.e., a total of the supported layer 23a and the unsupported layer 23b) is preferably 1 µm or more and 25 µm or less, more preferably 3µm or more and 22 µm or less, and still more preferably 5 µm or more and 20 µm or less. As the average thickness of the polymer layer is within the above-described range, the form of the protective layer 23 is more easily maintained stably.

In the present embodiment, the separator 3 is porous and can retain a non-aqueous electrolyte solution. Since the separator 3 is porous and can retain the non-aqueous electrolyte solution as described above, a sufficient amount of charge-transporting ions such as lithium ions are easily supplied from the separator 3 to the positive electrode 1 and the negative electrode 2. Therefore, it is possible to suppress an increase in the resistance of the non-aqueous electrolyte solution energy storage device.

FIG. 2 is a schematic cross-sectional view of an electrode body of a non-aqueous electrolyte solution energy storage device according to another embodiment of the present invention. The electrode body is formed in such a state that a positive electrode 1 and a negative electrode 8 are stacked with a separator 3 interposed therebetween. The negative electrode 8 includes a negative electrode substrate 81, a negative electrode active material layer 82 which is stacked on the negative electrode substrate 81 and contains metallic lithium, and a protective layer 83 stacked on the negative electrode active material layer 82. In the electrode body, a positive electrode substrate 11, a positive electrode active material layer 12, the separator 3, a protective layer 83, the negative electrode active material layer 82, and the negative electrode substrate 81 are stacked in this order. While an intermediate layer may be provided between the positive electrode substrate 11 and the positive electrode active material layer 12 and between the negative electrode substrate 81 and the negative electrode active material layer 82, the intermediate layer is omitted from FIG. 2.

The protective layer 83 contains a polymer having a structural unit derived from an unsaturated cyclic carbonate and a porous sheet supporting the polymer. More specifically, the protective layer 83 is composed only of a supported layer containing the polymer being supported by the porous sheet. The protective layer 83 is formed in such a state that pores of the porous sheet are filled with the polymer. In other words, the supported layer (protective layer 83) forms a polymer layer which contains the polymer and is stacked on the negative electrode active material layer 82.

In the present embodiment, metallic lithium contained in the negative electrode active material layer 82 can be deposited between the negative electrode active material layer 82 and the protective layer 83 (between the negative electrode active material layer 82 and the polymer layer) due to a charge. As described above, the surface of the protective layer 83 is easily maintained to be smooth and dense, and the form of the protective layer 83 is also easily maintained stably. Therefore, the metallic lithium tends to be deposited uniformly along the surface of the negative electrode active material layer 82. That is, a smooth layer of metallic lithium tends to be formed between the negative electrode active material layer 82 and the protective layer 83.

An average thickness of the protective layer 83 may be the same as the average thickness of the aforementioned polymer layer (the total of the supported layer 23a and the unsupported layer 23b).

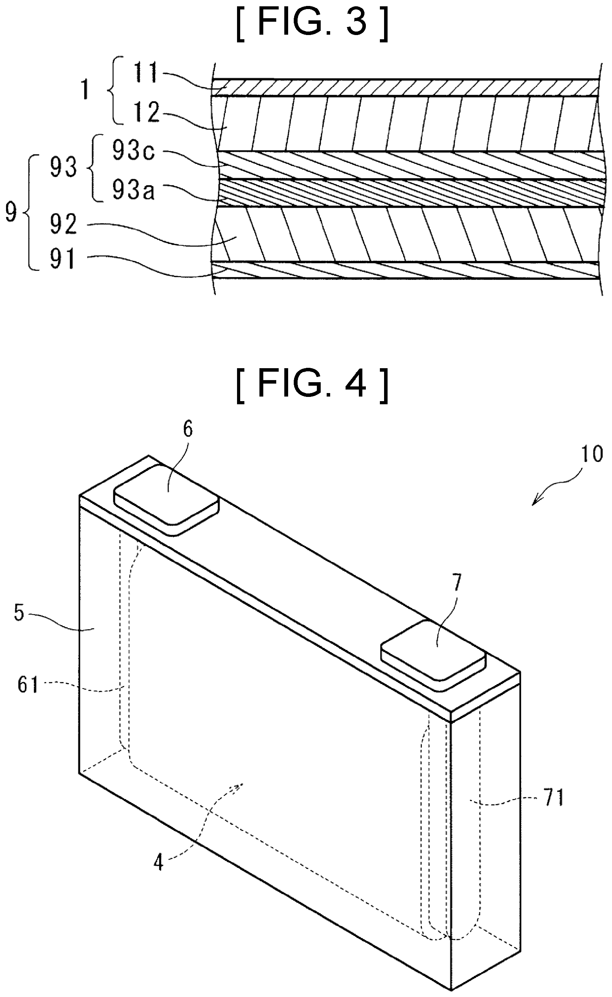

FIG. 3 is a schematic cross-sectional view of an electrode body of a non-aqueous electrolyte solution energy storage device according to yet another embodiment of the present invention. The electrode body is formed in such a state that a positive electrode 1 and a negative electrode 9 are stacked. The negative electrode 9 includes a negative electrode substrate 91, a negative electrode active material layer 92 which is stacked on the negative electrode substrate 91 and contains metallic lithium, and a protective layer 93 stacked on the negative electrode active material layer 92. In the electrode body, a positive electrode substrate 11, a positive electrode active material layer 12, the protective layer 93, the negative electrode active material layer 92, and the negative electrode substrate 91 are stacked in this order. While an intermediate layer may be provided between the positive electrode substrate 11 and the positive electrode active material layer 12 and between the negative electrode substrate 91 and the negative electrode active material layer 92, the intermediate layer is omitted from FIG. 3.

The protective layer 93 contains a polymer having a structural unit derived from an unsaturated cyclic carbonate and a porous sheet supporting the polymer. More specifically, the protective layer 93 includes a porous layer 93c, which is a layer of a porous sheet not supporting the polymer, and a supported layer 93a containing the polymer being supported by a porous sheet. The supported layer 93a is formed in such a state that pores of the porous sheet are filled with the polymer. In the present embodiment, the supported layer 93a is disposed to be opposed to the negative electrode active material layer 92, and the porous layer 93c is disposed to be opposed to the positive electrode active material layer 12. In other words, the supported layer 93a forms a polymer layer which contains the polymer and is stacked on the negative electrode active material layer 92.

In the present embodiment, metallic lithium contained in the negative electrode active material layer 92 can be deposited between the negative electrode active material layer 92 and the protective layer 93, more specifically, between the negative electrode active material layer 92 and the supported layer 93a (between the negative electrode active material layer 92 and the polymer layer) due to a charge. As described above, the surface of the protective layer 93 is easily maintained to be smooth and dense, and the form of the protective layer 93 is also easily maintained stably. Therefore, the metallic lithium tends to be deposited uniformly along the surface of the negative electrode active material layer 92. That is, a smooth layer of metallic lithium tends to be formed between the negative electrode active material layer 92 and the protective layer 93 (between the negative electrode active material layer 92 and the supported layer 93a).

In the present embodiment, the porous layer 93c of the protective layer 93 can retain a non-aqueous electrolyte solution. Since the porous layer 93c can retain the non-aqueous electrolyte solution as described above, a sufficient amount of charge-transporting ions such as lithium ions are easily supplied from the porous layer 93c to the positive electrode 1 and the negative electrode 9. When the protective layer 93 is configured to partially retain the non-aqueous electrolyte solution as described above, it is not necessary to additionally provide a separator or the like for retaining the non-aqueous electrolyte solution between the positive electrode 1 and the negative electrode 9. Therefore, mechanical strength of the protective layer 93 and ion permeability between the positive electrode 1 and the negative electrode 9 can be exhibited in good balance.

An average thickness of the supported layer 93a may be the same as the average thickness of the aforementioned polymer layer (the total of the supported layer 23a and the unsupported layer 23b). An average thickness of the porous layer 93c is not particularly limited, but may be, for example, 1 µm or more and 20 µm or less.

A positive electrode, a negative electrode, a separator, and an electrolyte solution of the non-aqueous electrolyte solution energy storage device according to an embodiment of the present invention will be hereinafter described in detail.

### (Positive electrode)

The positive electrode includes a positive electrode substrate and a positive electrode active material layer which is disposed on the positive electrode substrate directly or via an intermediate layer.

The positive electrode substrate has conductivity. Whether or not the positive electrode substrate has "conductivity" is determined on the basis of a volume resistivity measured in conformity with JIS H 0505:1975, with 10⁷ Ω·cm being set to a threshold value. As the material of the positive electrode substrate, a metal such as aluminum, titanium, tantalum, or stainless steel, or an alloy thereof is used. Among the above, aluminum or an aluminum alloy is preferable from the standpoint of potential resistance, high conductivity, and cost. Examples of the positive electrode substrate include a foil, a vapor-deposited film, a mesh, and a porous material, and a foil is preferable from the standpoint of cost. Therefore, an aluminum foil or an aluminum alloy foil is preferable as the positive electrode substrate. Examples of the aluminum or the aluminum alloy include A1085, A3003, and A1N30 specified in JIS H 4000:2014 or JIS H 4160:2006.

The intermediate layer is a layer which is disposed between the positive electrode substrate and the positive electrode active material layer. As the intermediate layer contains a conductive agent such as carbon particles, contact resistance between the positive electrode substrate and the positive electrode active material layer is reduced. A configuration of the intermediate layer is not particularly limited, and contains, for example, a binder and a conductive agent.

The positive electrode active material layer preferably contains a sulfur-based active material, and more preferably contains a composite of porous carbon and a sulfur-based active material. The positive electrode active material layer contains, as necessary, optional ingredients such as a conductive agent, a binder, a thickener, and a filler. The positive electrode active material layer is usually formed from a positive electrode mixture containing the composite and other optional ingredients.

Examples of the composite of the porous carbon and the sulfur-based active material include a form in which the porous carbon and the sulfur-based active material are contained in one particle. The composite may have a form in which at least a part of the sulfur-based active material is disposed within the pores of the porous carbon. In other words, the composite may have a form in which at least a part of the sulfur-based active material is impregnated into the porous carbon. In addition, a coating derived from a non-aqueous electrolyte solution is usually formed on the surface of the composite. The coating should preferably be formed in the voids of the composite as well.

The porous carbon is a porous body containing a carbon element as the main constituent element. The main constituent element refers to an element having the highest content on a mass basis. A content of the carbon element in the porous carbon is preferably 80% by mass or more, more preferably 90% by mass or more, and still more preferably 95% by mass or more. The porous carbon may be one which substantially consists of only the carbon element. The porous carbon may further contain other elements, such as an oxygen element, in addition to the carbon element.

A content of the porous carbon in the composite (a mass ratio of the porous carbon to the mass of the composite as a whole) is preferably 10% by mass or more and 50% by mass or less, more preferably 20% by mass or more and 45% by mass or less, and still more preferably 30% by mass or more and 40% by mass or less. When the content of the porous carbon in the composite is set to be within the above range, a discharge capacity of the non-aqueous electrolyte solution energy storage device can be increased, for example.

The sulfur-based active material functions as the positive electrode active material. The sulfur-based active material may be a simple substance of sulfur or a sulfur compound. Examples of the sulfur compound include metal sulfides such as a lithium sulfide, and organic sulfur compounds such as organic disulfide compounds and carbon sulfide compounds. The sulfur-based active material has such advantages that a theoretical capacity is high, and the cost is low.

In a case where the sulfur-based active material forms the composite, a content of the sulfur-based active material in the composite (a mass ratio of the sulfur-based active material to the mass of the composite as a whole) is preferably 50% by mass or more and 90% by mass or less, more preferably 55% by mass or more and 80% by mass or less, and still more preferably 60% by mass or more and 70% by mass or less. When the content of the sulfur-based active material in the composite is set to be within the above range, a discharge capacity of the non-aqueous electrolyte solution energy storage device can be increased, for example.

Main elements constituting the composite are a carbon element and a sulfur element. The composite may further contain an oxygen element, and may further contain a fluorine element or the like, apart from the aforementioned elements. The oxygen element, the fluorine element, and the like, may be elements constituting a coating which is derived from a non-aqueous electrolyte solution. The coating may further contain a carbon element, a hydrogen element, a lithium element, and the like, apart from the aforementioned elements.

A content of the sulfur-based active material in the positive electrode active material layer is preferably 50% by mass or more and 90% by mass or less, more preferably 60% by mass or more and 80% by mass or less. When the content of the sulfur-based active material is within the above range, the discharge capacity can be increased, and the energy density can be increased, for example.

In a case where the sulfur-based active material forms the composite, a content of the composite in the positive electrode active material layer is preferably 60% by mass or more and 95% by mass or less, more preferably 70% by mass or more and 90% by mass or less. When the content of the composite is set to be within the above range, the discharge capacity can be increased, and the energy density can be increased, for example.

The positive electrode active material layer may contain other positive electrode active materials apart from the sulfur-based active material. However, the content of the sulfur-based active material in the whole positive electrode active material is preferably 50% by mass or more, more preferably 70% by mass or more, still more preferably 90% by mass or more, yet still more preferably 99% by mass or more, and particularly preferably 100% by mass.

The conductive agent is not particularly limited as long as it is a material having conductivity. Note that the porous carbon constituting the composite is not included in the conductive agent. Examples of such a conductive agent include carbonaceous materials, metals, and conductive ceramic. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes (CNTs), and fullerene. Examples of the form of the conductive agent include a powdery form and a fibrous form. As the conductive agent, one of these materials may be used alone, or two or more kinds of these materials may be mixed and used. Moreover, these materials may be composited and used. For example, a composite material of carbon black and a CNT may be used. Among the above, carbon black is preferable and acetylene black is particularly preferable from the standpoint of electron conductivity and coatability. Using carbon black (preferably, acetylene black) and a CNT (preferably, a single-walled carbon nanotube) in combination is also preferable.

A content of the conductive agent in the positive electrode active material layer is preferably 1% by mass or more and 20% by mass or less, and more preferably 3% by mass or more and 15% by mass or less. When the content of the conductive agent is set to be within the above range, energy density of the non-aqueous electrolyte solution energy storage device can be increased.

Examples of the binder include thermoplastic resins such as fluororesins (polytetrafluoroethylene (PTFE), polyvinylidene fluoride (PVDF), etc.), polyethylene, polypropylene, polyacrylate, polyimide, and polyacrylic acid (PAA); elastomers such as ethylene-propylene-diene rubber (EPDM), sulfonated EPDM, styrene-butadiene rubber (SBR), and fluororubber; and polysaccharide polymers.

A content of the binder in the positive electrode active material layer is preferably 1% by mass or more and 10% by mass or less, and more preferably 3% by mass or more and 9% by mass or less. When the content of the binder is set to be within the above range, the composite and the like can be stably held.

Examples of the thickener include polysaccharide polymers such as carboxymethyl cellulose (CMC) and methyl cellulose. When the thickener has a functional group that reacts with lithium or the like, the functional group may be deactivated in advance by methylation or the like. A content of the thickener in the positive electrode active material layer is preferably 0.5% by mass or more and 10% by mass or less, more preferably 2% by mass or more and 5% by mass or less. In an embodiment of the present invention, no thickener may be contained in the positive electrode active material layer.

The filler is not particularly limited. Examples of the filler include: polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; poorly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica, or artificial products thereof, and the like. A content of the filler in the positive electrode active material layer is, for example, preferably 0.1% by mass or more and 10% by mass or less. In an embodiment of the present invention, no filler may be contained in the positive electrode active material layer.

The positive electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Nb, and W, as the constituents other than the sulfur-based active material, positive electrode active materials other than the sulfur-based active material, the porous carbon, the conductive agent, the binder, the thickener, and the filler.

### (Negative electrode)

The negative electrode includes a negative electrode substrate, a negative electrode active material layer which is disposed on the negative electrode substrate directly or via an intermediate layer, and a protective layer. A configuration of the intermediate layer is not particularly limited, and can be selected from the configurations exemplified for the positive electrode, for example.

The negative electrode substrate has conductivity. As the material of the negative electrode substrate, a metal such as copper, nickel, stainless steel, or nickel-plated steel, an alloy thereof, or a carbonaceous material or the like is used. Among the above, copper or a copper alloy is preferable. Examples of the negative electrode substrate include a foil, a vapor-deposited film, a mesh, and a porous material, and a foil is preferable from the standpoint of cost. Therefore, a copper foil or a copper alloy foil is preferable as the negative electrode substrate. Examples of the copper foil include a rolled copper foil and an electrolytic copper foil.

An average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate is set to be within the above range, energy density per volume of the non-aqueous electrolyte solution energy storage device can be increased while enhancing the strength of the negative electrode substrate.

The negative electrode active material layer contains metallic lithium. Metallic lithium is a constituent which functions as a negative electrode active material. The metallic lithium may be present as pure metallic lithium substantially consisting of only a lithium element, or may be present as a lithium alloy containing other metallic elements. Examples of the lithium alloy include a lithium-silver alloy, a lithium-zinc alloy, a lithium-calcium alloy, a lithium-aluminum alloy, a lithium-magnesium alloy, and a lithium-indium alloy. The lithium alloy may contain a plurality of metallic elements other than the lithium element.

The negative electrode active material layer may be a layer composed of only the metallic lithium. A content of the metallic lithium in the negative electrode active material layer is preferably 80% by mass or more, more preferably 90% by mass or more, and still more preferably 99% by mass or more.

The negative electrode active material layer may be a pure metallic lithium foil or a lithium alloy foil. The negative electrode active material layer may be a non-porous layer (i.e., a solid layer). The negative electrode active material layer may be a porous layer containing metallic lithium. An average thickness of the negative electrode active material layer in a charged state is preferably 5 µm or more and 1,000 µm or less, more preferably 10 µm or more and 500 µm or less, and still more preferably 30 µm or more and 300 µm or less. The "average thickness of the negative electrode electrode active material layer in a charged state" is intended as the average thickness of a single layer of the negative electrode active material layer in a charged state. For example, when the negative electrode active material layer is provided on both surfaces of the negative electrode substrate, the "average thickness of the negative electrode active material layer in a charged state" refers to a value per one surface. Further, the "charged state" refers to a state of the non-aqueous electrolyte solution energy storage device for which a constant current-constant voltage charge has been performed at a current of 0.1 C up to a charge cutoff voltage in normal use.

The negative electrode active material layer may further contain other negative electrode active materials apart from the metallic lithium. However, a content of the metallic lithium relative to the whole negative electrode active material contained in the negative electrode active material layer is preferably 90% by mass or more, more preferably 99% by mass or more, and still more preferably 100% by mass.

The negative electrode active material layer may further contain, as necessary, optional ingredients such as a conductive agent, a binder, a thickener, and a filler. The optional ingredients such as the conductive agent, the binder, the thickener, and the filler can be selected from the materials exemplified for the positive electrode.

The negative electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Ta, Hf, Nb, and W, as the constituents other than the negative electrode active material, the conductive agent, the binder, the thickener, and the filler.

The protective layer contains a polymer having a structural unit derived from an unsaturated cyclic carbonate, and a porous sheet supporting at least a part of the polymer. As described above, a part of the polymer may form an unsupported layer, which is a layer of the polymer, outside the porous sheet without being supported by the porous sheet. Further, the porous sheet may have a portion which does not support the polymer.

The unsaturated cyclic carbonate, which is a monomer serving as the base of the polymer, is a cyclic carbonate having an unsaturated bond between carbon atoms. Examples of the unsaturated cyclic carbonate include vinylene carbonate (VC), vinyl ethylene carbonate (VEC), 1-phenylvinylene carbonate, and 1,2-diphenylvinylene carbonate. Among the above, VC is preferable. That is, examples of the polymer having a structural unit derived from an unsaturated cyclic carbonate include polyvinylene carbonate, polyvinyl ethylene carbonate, a polymer of 1-phenylvinylene carbonate, and a polymer of 1,2-diphenylvinylene carbonate. Among the above, polyvinylene carbonate is preferable. The polymer having the structural unit derived from the unsaturated cyclic carbonate may be composed of one or more kinds of structural units derived from unsaturated cyclic carbonates. Further, a plurality of kinds of the above polymers may be mixed and used.

The polymer contained in the protective layer may be a copolymer having a structural unit derived from an unsaturated cyclic carbonate and another structural unit. A monomer serving as the base of the other structural unit preferably contains a vinyl group, more preferably contains an acryloyl group, and still more preferably contains an acryloyloxy group. In addition, it is also preferable that the monomer serving as the base of the other structural unit should include a cyclic structure. Examples of the cyclic structure contained in the monomer serving as the base of the other structural unit include an aliphatic carbon ring, an aliphatic heterocyclic ring, and an aromatic heterocyclic ring, and the aliphatic heterocyclic ring having a five-membered ring structure is preferable. Examples of the monomer serving as the base of the other structural unit include tetrahydrofurfuryl acrylate. Examples of the copolymer contained in the protective layer include a copolymer having a structural unit derived from vinylene carbonate and a structural unit derived from tetrahydrofurfuryl acrylate.

A content of a polymer having a structural unit derived from an unsaturated cyclic carbonate in the polymer contained in the protective layer is preferably 50% by mass or more, and may be more preferably 70% by mass or more, 80% by mass or more, 90% by mass or more, or 95% by mass or more. A content of the polymer having the structural unit derived from the unsaturated cyclic carbonate in the protective layer may be 100% by mass.

A content of a polymer having a structural unit derived from vinylene carbonate in the polymer contained in the protective layer is preferably 50% by mass or more, and may be more preferably 70% by mass or more, 80% by mass or more, 90% by mass or more, or 95% by mass or more. The content may be 100% by mass.

The porous sheet can be selected as appropriate from known separators used for energy storage devices. Examples of the form of the porous sheet include a woven fabric, a nonwoven fabric, and a porous resin film. Among the above forms, a porous resin film is preferable from the standpoint of strength. Examples of the material of the porous sheet include polyolefins such as polyethylene and polypropylene, polyimide, and aramid. As the porous sheet, a composite material obtained by combining these resins may be used.

It is preferable that the porous sheet should not include an inorganic compound layer on the outermost surface thereof on the negative electrode active material layer side. By virtue of the feature that an inorganic compound layer is not included on the outermost surface that is on the negative electrode active material layer side, metallic lithium tends to be deposited uniformly along the surface of the negative electrode active material layer, and the deposition of dendrites on the negative electrode can be further suppressed. Also from the standpoint of suppressing an increase in the resistance in the negative electrode, there may be a case where it is preferable that the porous sheet should not include an inorganic compound layer. Examples of the inorganic compound include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; poorly soluble ionic crystals such as calcium fluoride, barium fluoride, and barium titanate; covalent crystals such as silicon and diamond; and substances derived from mineral resources such as talc, montmorillonite, boehmite, zeolite, apatite, kaolin, mullite, spinel, olivine, sericite, bentonite, and mica, or artificial products thereof, and the like.

From the standpoint of enhancing ion permeability in the protective layer, an upper limit of air permeability of the porous sheet is preferably 100 sec/100 cm³, more preferably 70 sec/100 cm³, still more preferably 50 sec/100 cm³, and yet still more preferably 30 sec/100 cm³. Meanwhile, the lower limit of the air permeability of the porous sheet is not particularly limited, but may be 1 sec/100 cm³, 5 sec/100 cm³, or 10 sec/100 cm³.

The protective layer preferably further contains a lithium salt. The lithium salt is contained in the protective layer, for example, in such a state of being mixed with a polymer having a structural unit derived from an unsaturated cyclic carbonate. By virtue of the feature that the protective layer contains a mixture of the polymer and the lithium salt, flexibility of the protective layer can be increased, and occurrence of cracks in the protective layer can be suppressed. The lithium salt can be selected as appropriate from known lithium salts. Examples of the lithium salt include LiPF₆, LiPO₂F₂, LiClO₄, and a lithium imide salt. Among the above, a lithium imide salt is preferable. One or more kinds of the lithium salts can be used.

The lithium imide salt should preferably contain a fluorine atom. Specifically, for example, the lithium imide salt should preferably contain a fluorosulfonyl group, a difluorophosphonyl group, a fluoroalkyl group, or the like. Among the lithium imide salts, a lithium sulfonylimide salt is preferable, and LiN(SO₂CF₃)₂ (lithium bis(trifluoromethanesulfonyl)imide: LiTFSI) and LiN(SO₂F)₂ (lithium bis(fluorosulfonyl)imide: LiFSI) are more preferable, specifically, LiTFSI is still more preferable.

A lower limit of a content of the lithium salt based on the polymer having a structural unit derived from an unsaturated cyclic carbonate in the protective layer is preferably 1 mol/kg, more preferably 3 mol/kg, and still more preferably 5 mol/kg. When the content of the lithium salt is not less than the above-described lower limit, it is possible to more reliably suppress warpage of the negative electrode and occurrence of cracks in the protective layer. In addition, an increase in the resistance of the negative electrode due to the protective layer can be more reliably suppressed. Meanwhile, from the standpoint of ensuring the denseness and strength of the protective layer, an upper limit of the content of the lithium salt is preferably 15 mol/kg, more preferably 12 mol/kg, and still more preferably 10 mol/kg.

### (Separator)

The non-aqueous electrolyte solution energy storage device may include a separator as described above. A separator can be selected as appropriate from known separators. The separator is preferably a porous separator for retaining a non-aqueous electrolyte solution. As the separator, for example, a separator composed only of a substrate layer, a separator in which a heat-resistant layer containing heat-resistant particles and a binder is formed on one surface or both surfaces of a substrate layer, or the like can be used. Examples of the form of the substrate layer of the separator include a woven fabric, a nonwoven fabric, and a porous resin film. Among these forms, a porous resin film is preferable from the standpoint of the strength, and a nonwoven fabric is preferable from the standpoint of liquid retainability of the non-aqueous electrolyte solution. As the material of the substrate layer of the separator, a polyolefin such as polyethylene or polypropylene, for example, is preferable from the standpoint of shutdown function, and polyimide, aramid, or the like, for example, is preferable from the standpoint of resistance to oxidative decomposition. As the substrate layer of the separator, a material obtained by combining these resins may be used.

The heat-resistant particles contained in the heat-resistant layer preferably have a mass loss of not more than 5% when the temperature is raised from room temperature to 500 °C in an air atmosphere of 1 atmosphere, and more preferably have a mass loss of not more than 5% when the temperature is raised from the room temperature to 800 °C. Examples of a material whose mass loss is not more than a predetermined value include inorganic compounds. That is, the heat-resistant layer may be an inorganic particle layer containing inorganic particles and a binder. Examples of the inorganic compound include those described in the above section regarding the porous sheet of the negative electrode. As the inorganic compound, a simple substance or a composite of these substances may be used alone, or two or more kinds of the substances may be mixed and used. Among the inorganic compounds, silicon oxide, aluminum oxide, or aluminosilicate is preferable from the standpoint of safety of the non-aqueous electrolyte solution energy storage device.

A porosity of the separator is preferably not greater than 80% by volume from the standpoint of strength, and is preferably not less than 20% by volume from the standpoint of discharge performance. Here, the "porosity" is a value based on volume, and means a value measured by a mercury porosimeter.

As the separator, a polymer gel composed of a polymer and a non-aqueous electrolyte solution may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel brings about an advantageous effect that liquid leakage is suppressed. As the separator, the above-described porous resin film or nonwoven fabric may be used in combination with the polymer gel. However, from the standpoint of suppressing a short circuit due to deposition of dendrites on the negative electrode by enhancing the strength of the separator, it is preferable that the separator should not be a polymer gel (i.e., should preferably be a porous resin film or the like).

Except for the case where the polymer gel is used as the separator, the same kind of material as that of the porous sheet described above may be used for the separator.

### (Non-aqueous electrolyte solution)

The non-aqueous electrolyte solution contains a non-aqueous solvent and an electrolyte salt dissolved in the non-aqueous solvent. The non-aqueous solvent should preferably contain a carbonate.

Examples of the carbonate include a fluorinated linear carbonate, a fluorinated cyclic carbonate, a linear carbonate not having a fluorine atom, and a cyclic carbonate not having a fluorine atom. Examples of the fluorinated linear carbonate include trifluoroethyl methyl carbonate (TFEMC) and bis(trifluoroethyl) carbonate (FDEC). Examples of the fluorinated cyclic carbonate include fluorinated ethylene carbonates such as fluoroethylene carbonate (FEC) and difluoroethylene carbonate, fluorinated propylene carbonates such as fluoromethylethylene carbonate, and fluorinated butylene carbonates such as trifluoroethylethylene carbonate. Examples of the linear carbonate not having a fluorine atom include diethyl carbonate (DEC), ethyl methyl carbonate (EMC), dimethyl carbonate (DMC), and diphenyl carbonate. Examples of the cyclic carbonate not having a fluorine atom include ethylene carbonate (EC), propylene carbonate (PC), butylene carbonate (BC), vinylene carbonate (VC), vinylethylene carbonate (VEC), chloroethylene carbonate, styrene carbonate, catechol carbonate, 1-phenylvinylene carbonate, and 1,2-diphenylvinylene carbonate. Among the above, the fluorinated cyclic carbonate and the cyclic carbonate not having a fluorine atom are preferable. Further, FEC is preferable as the fluorinated cyclic carbonate, and VC is more preferable as the cyclic carbonate not having a fluorine atom. One or more kinds of the carbonates can be used.

The non-aqueous solvent may contain other organic solvents apart from the carbonate. Examples of the other organic solvents include esters, ethers, amides, lactones, nitriles, sulfones, sulfites, and the like. However, a content of the carbonate in the non-aqueous solvent is preferably 50% by volume or more and 100% by volume or less, more preferably 70% by volume or more and 100% by volume or less, and still more preferably 90% by volume or more and 100% by volume or less. The content of the carbonate in the non-aqueous solvent may be 100% by volume.

As the electrolyte salt, a lithium salt is preferable. The lithium salt can be selected as appropriate from known lithium salts. Examples of the lithium salt include LiPF₆, LiPO₂F₂, LiClO₄, and a lithium imide salt. One or more kinds of the lithium salts can be used.

As the lithium salt, a lithium imide salt is preferable. The lithium imide salt includes not only a lithium imide salt having a structure in which two carbonyl groups are bonded to a nitrogen atom, but also includes in the scope a lithium imide salt having a structure in which two sulfonyl groups are bonded to a nitrogen atom, a lithium imide salt having a structure in which two phosphonyl groups are bonded to a nitrogen atom, and the like.

Examples of the lithium imide salts include: a lithium sulfonylimide salt such as LiN(SO₂F)₂ (lithium bis(fluorosulfonyl)imide: LiFSI), LiN(SO₂CF₃)₂ (lithium bis(trifluoromethanesulfonyl)imide: LiTFSI), LiN(SO₂C₂F₅)₂ (lithium bis(pentafluoroethanesulfonyl)imide: LiBETI), LiN(SO₂C₄F₉)₂ (lithium bis(nonafluorobutanesulfonyl)imide), CF₃-SO₂-N-SO₂-N-SO₂CF₃Li₂, FSO₂-N-SO₂-C₄F₉Li, CF₃-SO₂-N-SO₂-CF₂-SO₂-N-SO₂-CF₃Li₂, CF₃-SO₂-N-SO₂-CF₂-SO₃Li₂, and CF₃-SO₂-N-SO₂-CF₂-SO₂-C(-SO₂CF₃)₂Li₂; and a lithium phosphonylimide salt such as LiN(POF₂)₂ (lithium bis(difluorophosphonyl)imide: LiDFPI).

The lithium imide salt should preferably contain a fluorine atom. Specifically, for example, the lithium imide salt should preferably contain a fluorosulfonyl group, a difluorophosphonyl group, a fluoroalkyl group, or the like. Among the lithium imide salts, a lithium sulfonylimide salt is preferable, in which LiTFSI and LiFSI are more preferable, and LiTFSI is still more preferable.

A content of the lithium salt in the non-aqueous electrolyte solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20 °C and 1 atmosphere. When the content of the lithium salt is set to be within the above range, ion conductivity of the non-aqueous electrolyte solution can be increased.

The non-aqueous electrolyte solution may contain an additive in addition to the non-aqueous solvent and the electrolyte salt. Examples of the additive include: aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partial halides of the above aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic acid anhydride, and cyclohexanedicarboxylic anhydride; and ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, and tetrakis(trimethylsilyl)titanate. One of these additives may be used alone, or two or more kinds of these additives may be mixed and used.

A content of the additive contained in the non-aqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the mass of the non-aqueous electrolyte solution as a whole. When the content of the additive is set to be within the above range, capacity retention performance or cycle performance exhibited after high-temperature storage can be improved, and the safety can be further improved.

The shape of the non-aqueous electrolyte solution energy storage device of the present embodiment is not particularly limited, and examples of the non-aqueous electrolyte solution energy storage device include a cylindrical battery, a prismatic battery, a flat-type battery, a coin battery, and a button battery.

FIG. 4 illustrates a non-aqueous electrolyte solution energy storage device 10 as an example of the prismatic battery. Note that FIG. 4 is a view in which the inside of a container is seen through. An electrode body 4 including a positive electrode and a negative electrode is accommodated in a prismatic container 5. The positive electrode is electrically connected to a positive electrode terminal 6 via a positive electrode lead 61. The negative electrode is electrically connected to a negative electrode terminal 7 via a negative electrode lead 71.

### <Energy Storage Apparatus>

The non-aqueous electrolyte solution energy storage device of the present embodiment can be mounted as an energy storage unit (a battery module) which is configured by assembling a plurality of non-aqueous electrolyte solution energy storage devices in a power source for automobiles such as Evs, HEVs, or PHEVs, a power source for electronic devices such as personal computers or communication terminals, or a power source for power storage, and the like. In this case, it is sufficient if the technique of the present invention is applied to at least one non-aqueous electrolyte solution energy storage device included in the energy storage unit.

An energy storage apparatus according to an embodiment of the present invention includes two or more energy storage devices, in which the energy storage apparatus includes one or more non-aqueous electrolyte solution energy storage devices according to the above-described embodiment of the present invention (hereinafter referred to as a "second embodiment".). It is sufficient if the technique according to an embodiment of the present invention is applied to at least one non-aqueous electrolyte solution energy storage device included in the energy storage apparatus according to the second embodiment. The energy storage apparatus may include one non-aqueous electrolyte solution energy storage device according to the above-described embodiment of the present invention and one or more energy storage devices that are not according to the above-described embodiment of the present invention, or may include two or more non-aqueous electrolyte solution energy storage devices according to above-described embodiment of the present invention.

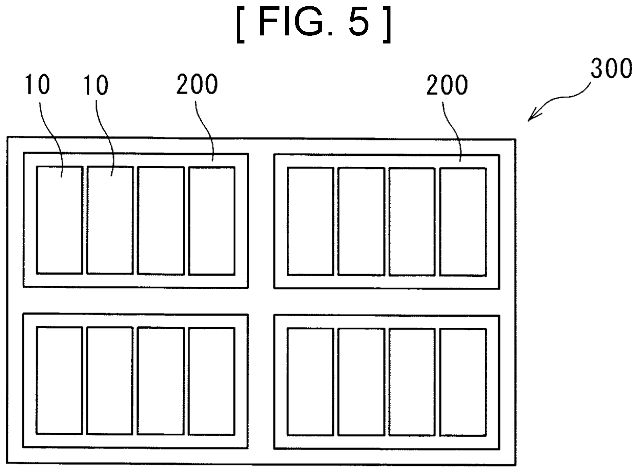

FIG. 5 illustrates an example of an energy storage apparatus 300 according to the second embodiment in which energy storage units 200, which are each configured by assembling two or more electrically connected non-aqueous electrolyte solution energy storage devices 10, are further assembled. The energy storage apparatus 300 may include a bus bar (not illustrated) for electrically connecting two or more non-aqueous electrolyte solution energy storage devices 10, a bus bar (not illustrated) for electrically connecting two or more energy storage units 200, and the like. The energy storage unit 200 or the energy storage apparatus 300 may include a state monitoring apparatus (not illustrated) which monitors the state of one or more non-aqueous electrolyte solution energy storage devices 10.

### <Method for Manufacturing Non-aqueous Electrolyte Solution Energy Storage Device>

A method for manufacturing the non-aqueous electrolyte solution energy storage device of the present embodiment can be selected as appropriate from known methods. The method for manufacturing includes, for example, preparing an electrode body, preparing a non-aqueous electrolyte solution, and accommodating the electrode body and the non-aqueous electrolyte solution in a container. Preparing the electrode body includes preparing a positive electrode, preparing a negative electrode, and forming an electrode body by stacking or winding the positive electrode and the negative electrode with a separator interposed therebetween. Preparing the negative electrode will be hereinafter described in detail as a method for manufacturing a negative electrode according to an embodiment of the present invention.

### (Method for manufacturing negative electrode)

A method for manufacturing a negative electrode according to an embodiment of the present invention includes: preparing a negative electrode material including a negative electrode active material layer containing metallic lithium; making a polymer solution containing a polymer having a structural unit derived from an unsaturated cyclic carbonate; preparing a porous sheet; and stacking a protective layer on the negative electrode active material layer by use of the polymer solution and the porous sheet. The protective layer contains the polymer and the porous sheet supporting at least a part of the polymer.

Preparing the negative electrode material may be preparing a negative electrode substrate and a negative electrode active material layer described in the section regarding the negative electrode of the non-aqueous electrolyte solution energy storage device.

Making the polymer solution containing the polymer having the structural unit derived from an unsaturated cyclic carbonate may be dissolving, in an organic solvent, the polymer (or copolymer) described in the section regarding the negative electrode of the non-aqueous electrolyte solution energy storage device. In the polymer solution, a lithium salt described in the section regarding the negative electrode of the non-aqueous electrolyte solution energy storage device may be mixed as appropriate. The polymer can be obtained, for example, by polymerizing a monomer such as an unsaturated cyclic carbonate in a solution in which the monomer is soluble, then dropping a polymer produced by the polymerization into a poor solvent such as ethanol to precipitate the polymer, and then washing and drying the polymer.

Preparing the porous sheet may be preparing a porous sheet described in the section regarding the negative electrode of the non-aqueous electrolyte solution energy storage device.

Stacking the protective layer may be, for example, applying a polymer solution onto a negative electrode active material layer, placing a porous sheet on the polymer solution, and drying the polymer solution and the porous sheet. That is, by placing a porous sheet on the polymer solution, allowing the polymer solution to be impregnated into the porous sheet, and thereafter drying the porous sheet, a protective layer including the porous sheet supporting a polymer contained in the polymer solution is obtained.

### <Other Embodiments>

The non-aqueous electrolyte solution energy storage device according to the present invention is not limited to the above-described embodiment, and various alterations may be made within a range that does not depart from the gist of the present invention. For example, a configuration of one embodiment can be added to a configuration of another embodiment, or a part of a configuration of one embodiment can be replaced with a configuration of another embodiment or a well-known technology. Further, a part of the configuration of one embodiment may be deleted. In addition, a well-known technology can be added to a configuration of one embodiment.

In the above-described embodiment, the case where the non-aqueous electrolyte solution energy storage device is used as a chargeable and dischargeable non-aqueous electrolyte solution secondary battery (lithium-ion secondary battery) has been described. However, the type, shape, size, capacity, and the like, of the non-aqueous electrolyte solution energy storage device are arbitrary. The present invention can also be applied to various secondary batteries, and capacitors such as electric double layer capacitors or lithium-ion capacitors.

### Examples

The present invention will be described more specifically with reference to Examples, but the present invention is not limited to the following Examples.

### [Example 1]

### (Fabrication of positive electrode)

Porous carbon and a simple substance of sulfur were mixed at a mass ratio of 30:70. This mixture was placed in a sealed reaction container, and the reaction container was set in a sealed electric furnace. A heat treatment in which: after performing an argon flow for one hour, the temperature was raised to 150 °C at a heating rate of 5 °C/min; then, after keeping the temperature for five hours, the temperature was allowed to cool to 80 °C, which is the solidifying temperature of a simple substance of sulfur; and then, the temperature was raised to 300 °C at a heating rate of 5 °C/min again and the temperature was kept for two hours was performed. By performing this heat treatment, a composite was produced.

With water used as a dispersion medium, a positive electrode mixture paste containing the composite obtained as described above, acetylene black and a single-walled carbon nanotube as the conductive agent, CMC as the thickener, and PAA and SBR as the binder was prepared. The positive electrode mixture paste was applied to a positive electrode substrate made of aluminum and dried to fabricate a positive electrode.

### (Preparation of negative electrode)

A sheet-like metallic lithium was prepared as a negative electrode substrate and a negative electrode active material layer. Meanwhile, polyvinylene carbonate (PVCA) was dissolved in a mixed solvent of dimethyl sulfoxide (DMSO) and tetrahydrofuran (THF), and lithium bis(trifluoromethanesulfonyl)imide (LiTFSI) was further mixed to make a polymer solution. Note that LiTFSI was mixed so that a content of the LiTFSI becomes 1 mol/kg with respect to the PVCA. After that, the polymer solution was applied onto the metallic lithium, and a porous sheet having air permeability of 30 sec/100 cm³ and the average thickness of 10µm was placed on the applied portion to obtain a negative electrode material. This porous sheet included no inorganic compound layer (inorganic particle layer). After temporarily drying the negative electrode material at 80 °C for 30 minutes, the negative electrode material was dried under reduced pressure at 80 °C for 24 hours. In this way, a negative electrode including a protective layer formed on the negative electrode active material layer was obtained.

### (Preparation of non-aqueous electrolyte solution)

A non-aqueous electrolyte solution was prepared by dissolving LiTFSI at a concentration of 1.0 mol/dm³ in a solvent obtained by mixing fluoroethylene carbonate (FEC) and vinylene carbonate (VC) as non-aqueous solvents at a volume ratio of 50:50.

### (Assembly and initial discharge of energy storage device)

A non-aqueous electrolyte solution energy storage device was assembled by using the positive electrode, the negative electrode, a porous resin film separator including inorganic particle layers on both surfaces thereof, and the non-aqueous electrolyte solution. The non-aqueous electrolyte solution energy storage device was subjected to an initial discharge at 25 °C and at a discharge current of 0.1 C and a discharge cutoff voltage of 1.0 V, whereby a non-aqueous electrolyte solution energy storage device of Example 1 was obtained.

### [Comparative examples 1 to 3]

Non-aqueous electrolyte solution energy storage devices of Comparative examples 1 to 3 were obtained by the same procedure as in Example 1, except that in the preparation of the negative electrode, the content of LiTFSI was changed to that as defined in Table 1, and the protective layer was formed without using a porous sheet.

### [Examples 2 to 6]

Non-aqueous electrolyte solution energy storage devices of Examples 2 to 6 were obtained by the same procedure as in Example 1, except that in the preparation of the negative electrode, the content of LiTFSI was changed to that as defined in Table 1, and a porous sheet having the air permeability as indicated in Table 1 was used. The porous sheet used in the non-aqueous electrolyte solution energy storage device of Example 6 included a heat-resistant inorganic compound layer (an inorganic particle layer) on the outermost layer thereof on the positive electrode side contrary to Examples 1 to 5.

### [Reference example 1]

A non-aqueous electrolyte solution energy storage device of Reference example 1 was obtained by the same procedure as in Example 1 except that a sheet-like metallic lithium having no protective layer was used as the negative electrode.

### [Evaluation]

For each of the obtained non-aqueous electrolyte solution energy storage devices, the presence or absence of cracks in the protective layer (film formability), resistance of the non-aqueous electrolyte solution energy storage device, and the form of deposition of the metallic lithium were evaluated as described below.

### (Presence or absence of cracks in protective layer)

The presence or absence of cracks in the protective layer was confirmed by cutting out a 5 mm × 5 mm test piece from a negative electrode which has been taken out from each of the non-aqueous electrolyte solution energy storage devices, washed, and dried under reduced pressure by the same procedure as in the case of measuring the content of lithium salt in the protective layer described above. The presence or absence of cracks in the protective layer was confirmed by checking a surface SEM image of the test piece acquired by using a scanning electron microscope (SEM). The confirmation results are shown in Table 1.

### (Resistance of non-aqueous electrolyte solution energy storage device)

Each of the obtained non-aqueous electrolyte solution energy storage devices was subjected to AC impedance measurement at a voltage amplitude of 10 mV and a frequency range from 7 MHz to 100 mHz as the measurement condition, and a real number component of the impetance at 0.1 MHz was taken as the resistance of each of the non-aqueous electrolyte solution energy storage devices. The obtained resistance of the non-aqueous electrolyte solution energy storage device is shown in Table 1.

### (Form of deposition of metallic lithium)

For each of the obtained non-aqueous electrolyte solution energy storage devices, a constant current-constant voltage charge was performed at 25 °C and at a charge current of 0.1 C and a charge cutoff voltage of 3.0 V, and then a constant current discharge was performed at 25 °C and at a discharge current of 0.1 C and a discharge cutoff voltage of 1.0 V. Thereafter, a rest period of 10 minutes was provided. These charge and discharge steps were assumed as one cycle, and repeated for 11 cycles.

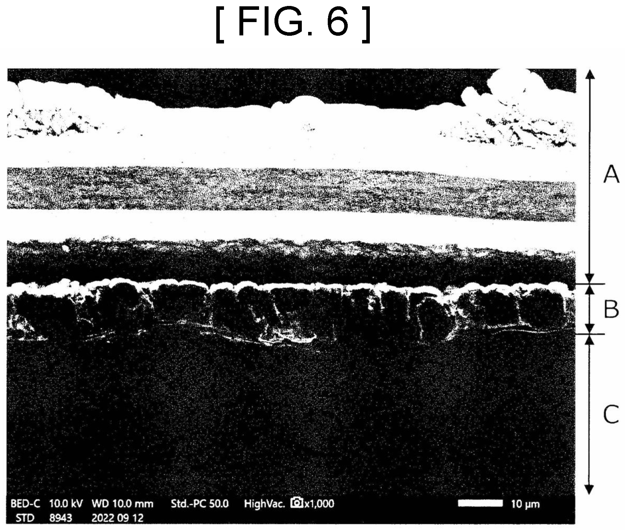

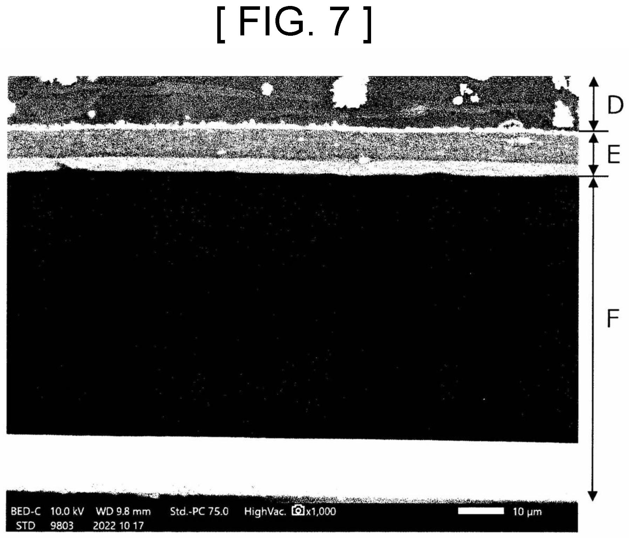

After a charge of the second cycle, a cross-sectional SEM image of the negative electrode was acquired by using the SEM on a 5 mm × 5 mm test piece of the negative electrode obtained by the same procedure as in the case of checking the presence or absence of cracks in the protective layer described above. In the cross-sectional SEM image of the negative electrode, if a boundary between the deposited metallic lithium and the negative electrode active material layer and the protective layer was observed, the form of deposition was assumed as being non-smooth, and if no boundary between the deposited metallic lithium and the negative electrode active material layer and the protective layer was observed, the form of deposition was assumed as being smooth. The evaluation results are shown in Table 1. Further, after a charge of the eleventh cycle, a cross-sectional SEM image of the negative electrode was acquired by using the SEM on a 5 mm × 5 mm test piece of the negative electrode obtained by the same procedure as that described above. FIG. 6 shows a cross-sectional SEM image of the negative electrode of Reference example 1, and FIG. 7 shows a cross-sectional SEM image of the negative electrode of Example 2 at this time.

**[Table 1]**

| | Content of LiTFSI [mol/kg] | Air permeability of porous sheet [sec/cm³] | Cracks | Resistance [Ω] | Deposition form of Li |
|---|---|---|---|---|---|
| Comparative example 1 | 0 | - | Yes | 8.6 | Non-smooth |
| Comparative example 2 | 1 | - | No | 5.4 | Non-smooth |
| Comparative example 3 | 5 | - | No | 1.4 | Non-smooth |
| Example 1 | 1 | 30 | No | 10.8 | Smooth |
| Example 2 | 5 | 30 | No | 0.9 | Smooth |
| Example 3 | 5 | 70 | No | 1.4 | Smooth |
| Example 4 | 5 | 190 | No | 1.8 | Smooth |
| Example 5 | 5 | 250 | No | 1.7 | Smooth |
| Example 6 | 5 | 165 | No | 3.5 | Smooth |

As indicated in Table 1, while metallic lithium was deposited non-smoothly in Comparative examples 1 to 3 in which the protective layer included no porous sheet, metallic lithium was deposited smoothly in Examples 1 to 6 in which the protective layer included a porous sheet. That is, it has been indicated that when a protective layer of the negative electrode includes a porous sheet supporting a polymer, deposition of dendrites could be suppressed.

In FIG. 6, A represents a separator or a void portion, B represents a layer in which metallic lithium has been deposited, and C represents the metallic lithium of a negative electrode active material layer. In a cross section of the negative electrode of Reference example 1, a boundary between the deposited metallic lithium and the negative electrode active material layer and the protective layer is observed, and a deposition surface of the metallic lithium is also not uniform. In FIG. 7, D represents a separator or a void portion, E represents a protective layer, and F represents a layer in which metallic lithium has been deposited and the metallic lithium of a negative electrode active material layer. In a cross section of the negative electrode of Example 2, the protective layer includes a light-colored layer (unsupported layer) of only a polymer on a side facing the negative electrode active material layer (i.e., the lower part in FIG. 7), and a dark-colored layer (supported layer) of a polymer supported by a porous sheet on a side opposite to the negative electrode active material layer (i.e., the upper part in FIG. 7). The protective layer as a whole forms a polymer layer in which at least a part of the polymer is supported by the porous sheet. From FIG. 7, an average thickness of the protective layer is approximately 10 µm. In a cross section of the negative electrode of Example 2, a boundary between the deposited metallic lithium and the negative electrode active material layer and the protective layer is not observed. That is, it is considered that in Example 2, metallic lithium has been deposited uniformly and smoothly.

When Comparative examples 1 to 3 were compared, there was occurrence of cracks in the protective layer when the protective layer contained no LiTFSI, and there was no occurrence of cracks in the protective layer when the protective layer contained LiTFSI. The reason for this is considered to be that the flexibility of the protective layer has been improved by the inclusion of the LiTFSI in the protective layer.

When Comparative examples 1 to 3 were compared, resistance of the non-aqueous electrolyte solution energy storage device was reduced as the content of the LiTFSI in the protective layer was increased. The reason for this is considered to be that the ion permeability in the protective layer was enhanced by the inclusion of the LiTFSI in the protective layer.

When Examples 2 to 5 in which the porous sheets of the protective layers included no inorganic particle layer and the contents of the LiTFSI in the protective layers were the same as each other were compared, the resistance of the non-aqueous electrolyte solution energy storage devices tended to decrease as the air permeability of the porous sheet decreased. The reason for this is considered to be that the lower the air permeability of the porous sheet is, the more the ion permeability in the protective layer is enhanced.

### INDUSTRIAL APPLICABILITY

The present invention can be applied to, for example, non-aqueous electrolyte solution energy storage devices used as power sources of electronic devices such as personal computers and communication terminals, automobiles, and the like.

### DESCRIPTION OF REFERENCE NUMERALS

10 Non-aqueous electrolyte solution energy storage device
1 Positive electrode
11 Positive electrode substrate
12 Positive electrode active material layer
2, 8, 9 Negative electrode
21, 81, 91 Negative electrode substrate
22, 82, 92 Negative electrode active material layer
23, 83, 93 Protective layer
23a, 93a Supported layer
23b Unsupported layer
93c Porous layer
3 Separator
4 Electrode body
5 Container
6 Positive electrode terminal
61 Positive electrode lead
7 Negative electrode terminal
71 Negative electrode lead
200 Energy storage unit
300 Energy storage apparatus

## Claims

1. A non-aqueous electrolyte solution energy storage device comprising a positive electrode, a negative electrode, and a non-aqueous electrolyte solution, in which:
the negative electrode includes a negative electrode active material layer containing metallic lithium, and a protective layer stacked on the negative electrode active material layer; and
the protective layer contains a polymer having a structural unit derived from an unsaturated cyclic carbonate and a porous sheet supporting at least a part of the polymer.

2. The non-aqueous electrolyte solution energy storage device according to claim 1, further comprising a porous separator which is interposed between the positive electrode and the negative electrode and retains the non-aqueous electrolyte solution.

3. The non-aqueous electrolyte solution energy storage device according to claim 1 or 2, wherein:
the protective layer includes a polymer layer which contains the polymer and is stacked on the negative electrode active material layer;
at least a part of the polymer in the polymer layer is supported by the porous sheet; and
an average thickness of the polymer layer is 1 µm or more.

4. The non-aqueous electrolyte solution energy storage device according to claim 1 or 2, wherein the positive electrode contains a sulfur-based active material, and the non-aqueous electrolyte solution contains a carbonate.

5. The non-aqueous electrolyte solution energy storage device according to claim 1 or 2, wherein the protective layer further contains a lithium salt, and a content of the lithium salt based on the polymer is 1 mol/kg or more.

6. The non-aqueous electrolyte solution energy storage device according to claim 1 or 2, wherein air permeability of the porous sheet is 100 sec/100 cm³ or less.

7. The non-aqueous electrolyte solution energy storage device according to claim 1 or 2, wherein the porous sheet includes no inorganic compound layer on an outermost surface thereof on the negative electrode active material layer side.

8. An energy storage apparatus comprising two or more energy storage devices, the energy storage apparatus comprising one or more non-aqueous electrolyte solution energy storage devices according to claim 1 or 2.

9. A method for manufacturing a negative electrode comprising:
preparing a negative electrode material including a negative electrode active material layer containing metallic lithium;
making a polymer solution containing a polymer having a structural unit derived from an unsaturated cyclic carbonate;
preparing a porous sheet; and
stacking a protective layer on the negative electrode active material layer by use of the polymer solution and the porous sheet, in which
the protective layer contains the polymer and the porous sheet supporting at least a part of the polymer.
